# EUROPÄISCHE PATENTSCHRIFT

(11) **EP 0 738 030 B1**
(45) Veröffentlichungstag und Bekanntmachung des Hinweises auf die Patenterteilung: **03.11.1999**
(21) Anmeldenummer: 95105345.3
(22) Anmeldetag: 08.04.1995
(51) Int. Cl.: H01R 39/56, H02K 5/14

(54) **Imprägnierte Kohlebürste für elektrische Maschinen**
Impregnated carbon brush for electrical machines
Balais en carbone imprégné pour machines électriques

(43) Veröffentlichungstag der Anmeldung: 16.10.1996
(73) Patentinhaber: Schunk Kohlenstofftechnik GmbH, D-35452 Heuchelheim (DE)
(72) Erfinder: Sperling, Rainer, Dr., D-35444 Biebertal (DE); Schardt, Günter, D-35398 Giessen-Klein-Linden (DE); Friedrich, Harald, D-35463 Fernwald (DE)
(74) Vertreter: Sternagel, Hans-Günther, Dr.

(56) Entgegenhaltungen:
- EP-A- 0 007 606
- WO-A-94/15382
- PATENT ABSTRACTS OF JAPAN Bd. 17, Nr. 579 (E-1451) 21 Oktober 1993 & JP-A-05 174 935 (TOYOTA AUTOM LOOM) 13 Juli 1993
- PATENT ABSTRACTS OF JAPAN vol. 12 no. 47 (C-475) ,12.Februar 1988 & JP-A-62 195092 (MATSUSHITA) 27.August 1987
- PATENT ABSTRACTS OF JAPAN Bd. 10, Nr. 217 (E-423) <2273> 29 Juli 1986 & JP-A-61 054 844 (MATSUSHITA) 19 M{rz 1986

## Beschreibung

Die Erfindung betrifft eine imprägnierte Kohlebürste für elektrische Maschinen, welche mit einem Imprägnierungsmittel zur Verbesserung der Laufeigenschaften imprägniert ist, sowie Verfahren zu ihrer Herstellung.

Kohlebürsten, die aus Kohlenstoff, natürlichem oder künstlichem Graphit, Gemische dieser Stoffe, gegebenenfalls auch mit metallischen Zusätzen bestehen, finden in Kommutatormotoren zum Beispiel in handgeführten Werkzeugmaschinen, z.B. Stichsägen, Bohrmaschinen und Winkelschleifer, und Haushaltsgeräten, z.B. Staubsauger, Mixer, Küchenmaschinen und Lüfter, Verwendung. Zur Optimierung der Betriebseigenschaften, wie Geräusch, Verschleiß, Kommutierung und Funkentstörung, sind die Bürsten in der Regel mit einem Imprägnierungsmittel versehen, siehe z.B. EP-A-0 007 606.

Zahlreiche Imprägnierungsmittel zur Verbesserung der Laufeigenschaften sind bekannt, sie können die unterschiedlichsten Substanzen sein: Metalle und deren Salze, Nichtmetalle und deren Salze, Kunststoffe, Harze, Paraffine, Wachse, Öle.

Bei der Anwendung von imprägnierten Kohlebürsten liegt ein Problem darin, daß die Imprägnierungsmittel bei der im Betrieb normalen Erwärmung der Bürste sich aus der Kohle verflüchtigen und eine nicht unbeträchtliche Geruchsbelästigung darstellen können. Der bei Staubsaugern der von der erwärmten, staubbeladenen Abluft ausgehende Geruch wird als störend empfunden. Speziell für diesen Fall sind sogenannte "Duftkapseln" bekannt, die in den Staubfangsack gelegt werden. Diese verlieren jedoch nach kurzer Zeit ihre Wirkung.

Der Erfindung liegt die Aufgabe zugrunde, die entstehende nachteilige Geruchsstörung bei dem Betrieb von elektrischen Maschinen mit imprägnierten Kohlebürsten ohne großen Mehraufwand oder Kosten und umweltverträglich zu beseitigen.

Die Aufgabe wird durch eine imprägnierte Kohlebürste gelöst, die zusätzlich mit einem oder mehreren Geruchüberdekkungsmitteln imprägniert ist.

Die imprägnierte Kohlebürste wird erfindungsgemäß durch ein Verfahren mit den Merkmalen der Ansprüche 7 oder 8 hergestellt. Dabei wird die Bürste zusätzlich mit einem oder mehreren Geruchüberdeckungsmitteln imprägniert.

Die Kohlebürsten enthalten vorzugsweise 0,01 bis 2 Gew.% Geruchsüberdeckungsmittel.

Die erfindungsgemäßen Kohlebürsten finden insbesondere in Kommutatormotoren von handgeführten Werkzeugmaschinen oder Haushaltsgeräten Verwendung.

Unter dem Begriff "Geruchüberdeckungsmittel" werden hier Geruchs- und Riechstoffe, Aromastoffe, Parfümöle, Deodorantien verstanden.

Beispiele für Riechstoffe, die im Rahmen der vorliegenden Erfindung als Geruchsüberdeckungsmittel einsetzbar sind, umfassen, z.B. acyclische aliphatische Verbindungen, wie z.B. aliphatische Aldehyde, Acetate der aliphatischen Aldehyde, aliphatische Ester und acyclische Terpenverbindungen; cyclische Terpenverbindungen; Orangenterpen; cycloaliphatische Verbindungen; aromatische Verbindungen; Phenole und Phenol-Derivate; O-Heterocyclen; N- und S-Heterocyclen; ätherische Öle, wie z.B. Citrusöle, Cedernöle, Eucalyptusöle, Lavandulaöle, Salbeiöle, Rosenöle, Sandelholzöle, Wacholderbeeröle, Koniferennadelöle.

Zu den Beispielen für acyclische Terpenverbindungen gehören Terpenalkohol, wie z.B. Geraniol, Nerol, Linalool, Lavandulol, Citronellal und Tetrahydrogeraniol, Terpenaldehyde, wie z.B. Citronellal, Terpenester, wie z.B. die Ester des Geraniols, des Linalools und des Citronellals.

Zu den Beispielen für cyclische Terpenverbindungen gehören Terpenkohlenwasserstoffe, wie z.B. α-Pinen und γ-Terpinen, Terpenalkohol, wie z.B. Menthol und Terpineol, Terpenketone, wie z.B. Menthon, Carvon, Campher und Fenchon, Terpenester, wie z.B. Bornylacetat.

Es können auch Riechstoffgemische oder technische bekannte handelsübliche Geruchsverbesserungsmittel, wie z.B. Oleodor^{®}, verwendet werden.

Im Rahmen der vorliegenden Erfindung wird vorzugsweise Citronellal oder Orangenterpen (Sesquiterpenaldehydmischung von α- und β-Sinensal) verwendet.

Das Geruchüberdeckungsmittel wird so ausgewählt, daß das Laufverhalten der Kohlebürste nicht oder nicht meßbar beeinflußt wird. Das bevorzugte Geruchüberdeckungsmittel und das Imprägnierungsgemisch können modifiziert werden, um sich auf verschiedene Kohlebürsten und ihre bestimmten Betriebseigenschaften anzupassen.

Das Geruchüberdeckungsmittel wird vorzugsweise zusammen mit dem Mittel zur Verbesserung der Laufeigenschaften der Kohlebürste (hier definiert als Funktionsmittel) in das Kohlebürstenmaterial imprägniert werden, wobei ein Gemisch der Imprägnierungsmittel hergestellt und eingesetzt wird. Das Geruchüberdeckungsmittel kann auch in das Kohlebürstenmaterial durch eine separate Imprägnierung vor oder nach der Imprägnierung mit dem Funktionsmittel eingebracht werden.

Die Geruchüberdeckungsmittel werden auf eine Konzentration von 0,1 - 10 Vol%, bezogen auf das Volumen des Funktionsmittels bei der einstufigen Imprägnierung bzw. des Lösungsmittels bei der separaten Imprägnierung, verdünnt.

Die Imprägnierung kann nach dem Vakuum-Druck-Verfahren im geschlossen Autoklaven oder durch einfaches Tauchen in offenen oder geschlossen Anlagen erfolgen. Die behandelte Kohlebürste kann bei einer Temperatur über 100 °C von 1 bis 5 Stunden getrocknet werden, um eine gleichmäßige Imprägnierung und Entfernen von Lösemitteln sicherzustellen.

Der im Kohlematerial verbleibende Imprägnierungsmittelanteil beträgt 1 bis 20 Gew.%, bezogen auf das Gewicht des imprägnierten Kohlematerials. Die relativen Anteile von üblichen Imprägnierungsmittel:Geruchsüberdeckungsmittel betragen 99,9:0,1 - 90:10.

Die erfindungsgemäße Kohlebürste ermöglicht während des Betriebs der Kohlebürste die vollständige Überdeckung von störenden Gerüchen.

Andere Vorteile der Kohlebürste nach der vorliegenden Erfindung sind, daß die Herstellung der erfindungsgemäßen Kohlebürste kein kompliziertes Verfahren benötigt und die Imprägnierung des Geruchüberdeckungsmittels gleichzeitig mit einem oder mehreren Funktionsmitteln durchgeführt werden kann.

Die Erfindung wird durch die nachfolgenden Beispiele näher erläutert.

### Beispiel 1:

Eine Kohlebürste mit einer offenen Porosität von 16 Vol.% wurde mit einem Mineralöl, dem Citronellal in einer Konzentration von 0.5 Vol.% zugemischt war, durch Tauchen imprägniert. Nach Trocknen enthielt die imprägnierte Kohlebürste ca. 8 Gew.% Imprägnierungsmittel und Geruchsüberdeckungsmittel. Im anschließenden Laufversuch der Kohlebürste war der störende Geruch des Mineralöls durch den Riechstoff vollständig überdeckt.

### Beispiel 2:

Eine Kohlebürste mit einer offenen Porosität von 25 Vol.% wurde mit einem Mineralöl, dem Orangenterpen in einer Konzentration von 1 Vol.% zugemischt war, durch Tauchen imprägniert. Nach Trocknen enthielt die imprägnierte Kohlebürste ca. 15 Gew.% Imprägnierungsmittel und Geruchsüberdeckungsmittel. Im anschließenden Laufversuch der Kohlebürste war der störende Geruch des Mineralöls durch den Riechstoff vollständig überdeckt.

## Patentansprüche

1. Imprägnierte Kohlebürste für elektrische Maschinen, welche mit einem Imprägnierungsmittel zur Verbesserung der Laufeigenschaften imprägniert ist,
**dadurch gekennzeichnet,**
daß die Kohlebürste zusätzlich mit einem oder mehreren Geruchüberdeckungsmitteln imprägniert ist.

2. Kohlebürste nach Anspruch 1,
**dadurch gekennzeichnet,**
daß das Geruchüberdeckungsmittel ein Geruchsstoff, Riechstoff, Aromastoffe, Parfümöl oder Deodorant ist.

3. Kohlebürste nach Anspruch 2,
**dadurch gekennzeichnet,**
daß das Geruchüberdeckungsmittel eine acyclische oder cyclische Terpenverbindung ist.

4. Kohlebürste nach Anspruch 2,
**dadurch gekennzeichnet,**
daß das Geruchüberdeckungsmittel Orangenterpen ist.

5. Kohlebürste nach Anspruch 3,
**dadurch gekennzeichnet,**
daß das Geruchsübedeckungsmittel Citronellal ist.

6. Kohlebürste nach Anspruch 1 bis 5,
**dadurch gekennzeichnet,**
daß die Kohlebürste 0,01 bis 2 Gew.% Geruchüberdekkungsmittel enthält.

7. Verfahren zur Herstellung einer mit einem Imprägnierungsmittel zur Verbesserung der Laufeigenschaften imprägnierten Kohlebürste,
**gekennzeichnet durch** Imprägnieren eines oder mehrerer Geruchüberdeckungsmittel zusammen mit der Imprägnierung zur Verbesserung der Laufeigenschaften in die Kohlebürste.

8. Verfahren zur Herstellung einer mit einem Mittel zur Verbesserung der Laufeigenschaften imprägnierten Kohlebürste,
**gekennzeichnet durch** Imprägnieren eines oder mehrerer Geruchüberdeckungsmittel in die Kohlebürste in einem getrennten Schritt vor oder nach der Imprägnierung mit dem Mittel zur Verbesserung der Laufeigenschaften.

9. Verwendung der Kohlebürste nach einer der Ansprüche 1 bis 8 in Kommutatormotoren von handgeführten Werkzeugmaschinen oder Haushaltsgeräten.

## Claims

1. Impregnated carbon brush for electric machines, which is impregnated with an impregnating agent to improve the running properties, characterized in that the carbon brush is additionally impregnated with one or more odour masking agents.

2. Carbon brush according to Claim 1, characterized in that the odour masking agent is an odorous substance, scent, aroma substances, perfume oil or deodorant.

3. Carbon brush according to Claim 2, characterized in that the odour masking agent is an acyclic or cyclic terpene compound.

4. Carbon brush according to Claim 2, characterized in that the odour masking agent is orange terpene.

5. Carbon brush according to Claim 3, characterized in that the odour masking agent is citronellal.

6. Carbon brush according to Claim 1 to 5, characterized in that the carbon brush contains 0.01 to 2 wt.% of odour masking agent.

7. Process for the manufacture of a carbon brush impregnated with an impregnating agent to improve the running properties, characterized by impregnation of one or more odour masking agents together with the impregnation to improve the running properties into the carbon brush.

8. Process for the manufacture of a carbon brush impregnated with an agent to improve the running properties, characterized by impregnation of one or more odour masking agents into the carbon brush in a separate step before or after the impregnation with the agent for improving the running properties.

9. Use of the carbon brush according to one of Claims 1 to 8 in commutator motors of hand-operated machine tools or domestic appliances.

## Revendications

1. Balai de charbon imprégné pour machines électriques, qui est imprégné d'un agent d'imprégnation servant à améliorer les propriétés de marche, caractérisé en ce que le balai de charbon est imprégné en outre d'un ou plusieurs agents couvrant l'odeur.

2. Balai de charbon suivant la revendication 1, caractérisé en ce que l'agent couvrant l'odeur est une matière exaltant une senteur, une matière odorante, des matières aromatiques, une huile de parfumerie ou un désodorisant.

3. Balai de charbon suivant la revendication 2, caractérisé en ce que l'agent couvrant l'odeur est une liaison de terpène acyclique ou cyclique.

4. Balai de charbon suivant la revendication 2, caractérisé en ce que l'agent couvrant l'odeur est un terpène d'orange.

5. Balai de charbon suivant la revendication 3, caractérisé en ce que l'agent couvrant l'odeur est du citronellal.

6. Balai de charbon suivant la revendication 1 à 5, caractérisé en ce que le balai de charbon contient 0,01 à 2% en poids d'agent couvrant l'odeur.

7. Procédé de fabrication d'un balai de charbon imprégné d'un agent d'imprégnation servant à améliorer les propriétés de marche, caractérisé par une imprégnation d'un ou plusieurs agents couvrant l'odeur en commun avec l'imprégnation servant à améliorer les propriétés de marche dans le balai de charbon.

8. Procédé de fabrication d'un balai de charbon imprégné d'un moyen servant à améliorer les propriétés de marche, caractérisé par une imprégnation d'un ou plusieurs agents couvrant l'odeur dans le balai de charbon en une opération séparée avant ou après l'imprégnation au moyen de l'agent servant à améliorer les propriétés de marche.

9. Application du balai de charbon suivant l'une des revendications 1 à 8 dans des moteurs à collecteur d'appareils domestiques ou de machines-outils à commande à la main.
